# EUROPEAN PATENT APPLICATION

(11) **EP 4 349 452 A1**
(43) Date of publication of application: **10.04.2024**
(21) Application number: 22816255.8
(22) Date of filing: 09.02.2022
(51) Int. Cl.: B01D 53/14, B01D 53/78, B01D 53/79, C02F 1/66

(54) **LAND-BASED SYSTEM FOR CAPTURING CARBON DIOXIDE AND SULFUR OXIDE AND CONVERTING INTO CARBON RESOURCE**

(30) Priority: 31.05.2021 KR 20210070000
(71) Applicant: Lowcarbon Co., Ltd., Seongjeon-myeon, Gangjin-gun Jeollanam-do 59205 (KR)
(72) Inventor: LEE, Cheol, Cheongju-si Chungcheongbuk-do 28709 (KR)
(74) Representative: M. Zardi & Co S.A.
(86) International application number: PCT/KR2022/001991
(87) International publication number: WO 2022/255591

(57) **Abstract**

Proposed is a carbon dioxide capture and carbon resource recovery system for land use capable of removing carbon dioxide and recycling the captured carbon dioxide into other useful materials by capturing and converting carbon dioxide in the flue gas using a basic alkaline mixture. The carbon dioxide capture and carbon resource recovery system for land use can reduce carbon dioxide by capturing carbon dioxide in flue gas discharged from lands, such as thermal power plants, LNG, LPG, or fuel cell facilities, and by converting the collected carbon dioxide into sodium carbonate or sodium hydrogen carbonate, the collected carbon dioxide may be converted into other useful materials.

## Description

### Technical Field

The present disclosure relates to a carbon dioxide capture and carbon resource recycling system for land use that can simultaneously remove carbon dioxide and convert carbon dioxide into other useful materials by capturing and converting carbon dioxide in flue gas using a basic alkaline mixture.

### Background Art

As for Global climate change, there are periodic alternations of ice ages and interglacial periods due to changes in orbit, cycles with varying angles of the axis of rotation, cycles of precession, and solar radiation, and the increase in temperature during the transition from the ice age to the interglacial period is increasing by 1°C over 100 years. However, in recent years, the average temperature has risen by 0.74°C over 100 years, which is seven times higher than the temperature increase caused by natural phenomena, indicating that this is due to artificial phenomena caused by human activities. Global warming is expected to disrupt the global ecosystem, such as rising sea levels, famine, the occurrence of diseases such as malaria, and changes in water shortages as global temperatures rise, causing great disasters for mankind.

In particular, carbon dioxide is designated as a greenhouse gas that causes global warming, and although the global warming index of carbon dioxide is lower than that of other greenhouse gases, it should be noted that carbon dioxide accounts for 80% of all greenhouse gas emissions and can regulate emissions. For this reason, the International Maritime Organization (IMO) finally decided to introduce the energy efficiency design index (EEDI) for new ships to be built in the future, and ships will have to reduce greenhouse gases by an average of 30% by 2025.

Accordingly, carbon dioxide capture and storage (CCS) technology is being actively studied as one of the alternatives to reduce the emission of carbon dioxide, which accounts for most of the greenhouse gases that cause global warming, according to the Climate Change Convention for the prevention of global warming.

Carbon dioxide capture and storage (CCS) technology is a technology that captures, transports, stores, or converts (immobilizes) greenhouse gases emitted from fossil fuel combustion. Since this technology can effectively reduce CO₂ emissions, the CCS technology is being considered as a realistic alternative to play the role of bridging technology until the economic feasibility of renewable energy is secured.

CCS is mainly used to reduce carbon dioxide generated during power generation using coal and gas, but it is also applied to carbon dioxide-intensive industries such as cement, steel, petrochemicals, and oil and gas production. There are other storage methods, such as geological storage, marine storage, or storage in minerals. However, marine storage is currently prohibited due to concerns that it will pose a high environmental risk. Storage in minerals is the subject of current research, but technological developments such as energy use reduction and large-scale reduction technology improvement are still needed.

### Disclosure

### Technical Problem

In order to solve the above problems, the present disclosure relates to a carbon dioxide capture and carbon resource recycling system for land use that can simultaneously remove carbon dioxide and convert carbon dioxide into other useful materials by capturing and converting carbon dioxide in flue gas using a basic alkaline mixture.

### Technical Solution

In order to solve the above problem,
an embodiment of the present disclosure provides a carbon dioxide and sulfur oxide capture system for ships, the system includes: a mixer for supplying a basic alkaline mixture; an absorption tower for capturing carbon dioxide in the flue gas by reacting the basic alkaline mixture supplied from the mixer and the flue gas having fine droplets through a bubbler installed at the bottom; a separator for collecting a reactant containing carbon dioxide captured in the absorption tower and separating a carbon dioxide reactant and a waste solution from the reactant; and a discharge unit for sending carbon dioxide reactants from the separator to the absorption tower to capture sulfur oxides in the flue gas, and discharging the captured sulfur oxides, carbon dioxide reactants, and residual flue gas.

The bubbler may form flue gas microbubbles using the flue gas.

The mixer may be one in which the basic alkaline solution supplied from the basic alkaline solution storage tank and the water supplied from the water supply source are mixed.

The basic alkaline solution and water may be mixed in a ratio of 1:1 to 1:5.

The average pH of the basic alkaline mixture may be at least pH 12.

The basic alkaline mixture may include: at least one oxide selected from the group consisting of SiO₂, Al₂O₃, Fe₂O₃, TiO₂, MgO, MnO, CaO, Na₂O, K₂O, and P₂O₃; at least one metal selected from the group consisting of Li, Cr, Co, Ni, Cu, Zn, Ga, Sr, Cd, and Pb; and at least one liquid composition selected from the group consisting of sodium tetraborate (Na₂B₄O₇·10H₂O), sodium hydroxide (NaOH), sodium silicate (Na₂SiO₃), and hydrogen peroxide (H₂O₂).

The absorption tower may be supplied with the basic alkaline mixture from the mixer through a plurality of nozzles installed on the top thereof.

The absorption tower may be configured in series, parallel, or a series and parallel complex arrangement.

The carbon dioxide capture and carbon resource recovery system for land use may further include: a monitoring unit for monitoring the filling level and pH of the basic alkaline mixture in the absorption tower; and a control unit for controlling the supply amount of the basic alkaline mixture by the monitoring unit.

The carbon dioxide reactant may include sodium carbonate (Na₂CO₃) or sodium hydrogen carbonate (NaHCO₃).

### Advantageous Effects

The carbon dioxide capture and carbon resource recovery system for land use, according to the present disclosure, can reduce carbon dioxide by capturing carbon dioxide in flue gas discharged from lands, such as thermal power plants, LNG, LPG, or fuel cell facilities. It is possible to convert the captured carbon dioxide into a carbon resource such as sodium carbonate or sodium hydrogen carbonate using the captured carbon dioxide to other useful materials.

### Description of Drawings

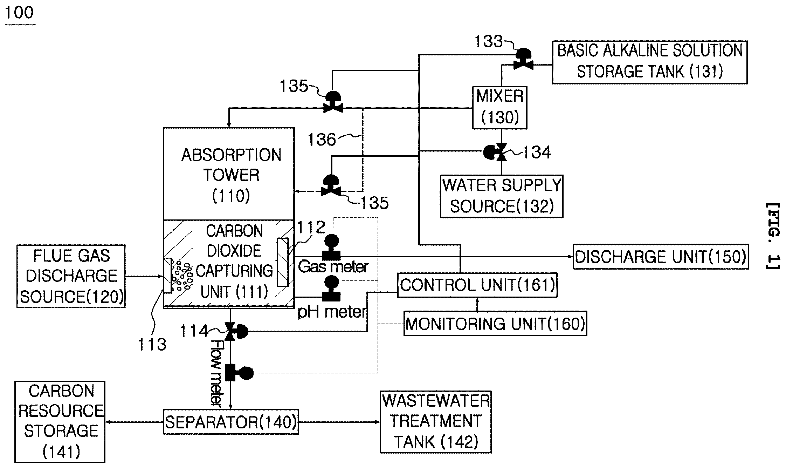

FIG. 1 is a schematic diagram illustrating a carbon dioxide capture and carbon resource recovery system for land use according to the present disclosure.

### Best Mode

Since the present disclosure may apply various changes and have various embodiments, specific embodiments will be illustrated in the drawings and described in detail in the detailed description.

While specific embodiments of the disclosure will be described herein below, they are only for illustrative purposes and should not be construed as limiting to the present disclosure. Accordingly, the present disclosure should be construed to cover not only the specific embodiments but also cover all modifications, equivalents, and substitutions that fall within the spirit and technical scope of the present disclosure.

Terms such as first and second may be used to describe various elements, but the elements should not be limited by the terms. The above terms are used only for the purpose of distinguishing one component from another. For example, without departing from the scope of the present disclosure, a first component may be referred to as a second component, and similarly, the second component may also be referred to as a first component.

In this disclosure, the term "include" or "have" is intended to designate that a feature, number, step, operation, component, part, or a combination thereof described in the specification exists and should be understood not to preclude the existence or addition of one or more other features, number, operation, component, component, or combination thereof.

Hereinafter, the present disclosure will be described in detail.

The present disclosure provides a carbon dioxide capture and carbon resource recovery system for land use, the system includes: a mixer for supplying a basic alkaline mixture; an absorption tower for capturing carbon dioxide in the flue gas by reacting the basic alkaline mixture supplied from the mixer and the flue gas having fine droplets through a bubbler installed at the bottom; a separator for collecting a reactant containing carbon dioxide captured in the absorption tower and separating a carbon dioxide reactant and a waste solution from the reactant; a carbon resource storage for storing the separated carbon dioxide reactant as a resource; and a discharge unit for discharging the residual flue gas from which the carbon dioxide captured in the absorption tower has been removed.

Hereinafter, a carbon dioxide capture and carbon resource recovery system for land use according to the present disclosure will be described in more detail with reference to the drawings.

FIG. 1 is a schematic diagram illustrating a carbon dioxide capture and carbon resource recovery system 100 for land use according to the present disclosure.

As shown in FIG. 1, the capture system 100 for land use, according to the present disclosure, captures carbon dioxide in the flue gas discharged from the land use using a basic alkaline solution. The capture system includes an absorption tower 110, a carbon dioxide capturing unit 111, a flue gas emission source 120, a mixer 130, a separator 140, a carbon resource storage 141, and a discharge unit 150.

The absorption tower 110 may refer to a facility, a building, or a facility for capturing carbon dioxide. In addition, the carbon dioxide capturing unit 111 positioned at the lower end of the absorption tower 110 is a part of the absorption tower 110 and may mean a part for capturing carbon dioxide by bubbling the flue gas.

The absorption tower 110 includes a carbon dioxide capturing unit 111 that captures carbon dioxide at the bottom and captures only carbon dioxide in the flue gas by reacting the basic alkaline mixture with the flue gas (flue gas microbubbles). After capturing carbon dioxide in the flue gas, the flue gas from which carbon dioxide has been removed may remain in a gaseous state in the absorption tower 110.

The absorption tower 110 has a nozzle installed at the top, and the basic alkaline mixture is sprayed from the mixer 130 through the nozzle into the absorption tower 110 and gathered in the carbon dioxide capturing unit 111 at the bottom. At the same time that the basic alkaline mixture is sprayed, the flue gas supplied from the flue gas discharge source 120 passes through the bubbler 113 in the carbon dioxide capturing unit 111 under the absorption tower 110, and the flue gas generated with microbubbles is supplied, and the basic alkaline mixture and the flue gas microbubbles react in the carbon dioxide capturing unit 111 to capture carbon dioxide. When flue gas is reacted with a basic alkaline mixture, the microbubbles are formed as the reactant passes through the bubbler 113, having a fine hole formed in the outlet of the flue gas discharge source 120.

The bubbler 113 may form microbubbles in the flue gas by passing through the flue gas supplied from the flue gas emission source 120, and the smaller the bubble, the larger the reaction area between the flue gas and the alkaline solution, thereby increasing the carbon dioxide capturing capacity. For example, a microbubble may refer to bubbles existing in an aqueous solution having a size of about 50 µm or less.

In addition, the absorption tower 110 may include a level indicator 112 inside to detect the filling level of the solution in the absorption tower 110.

The nozzle may include a plurality of nozzles and may be formed in one or more stages. The nozzle may be connected to the mixer 130 to supply the basic alkaline mixed solution from the mixer 130.

The absorption tower 110 may be configured in series, parallel, or a series and parallel complex arrangement.

For example, the absorption tower 110 may be arranged in series when the flow rate of the flue gas is high. When unreacted CO₂ is discharged from the absorption tower because of a high flow rate of the absorption tower, the absorption tower can be installed in series to capture unreacted CO₂.

Also, for example, the absorption tower 110 may be arranged in parallel when the amount of the flow of the flue gas is large. When the amount of the flow of the flue gas exceeds the amount that can be captured by the absorption tower, the amount of carbon dioxide that can be captured may be increased by installing the absorption towers in parallel.

The flue gas emission source 120 may utilize all gases that discharge carbon dioxide and sulfur oxide, for example, the rear end of power plant flue gas or the rear end of engine flue gas, and in the present disclosure, that gases may be flue gas discharged from a thermal power plant, LNG, LPG, or a fuel cell facility.

The mixer 130 mixes the basic alkaline solution supplied from the basic alkaline solution storage tank 131 and the water supplied from the water supply source 132 and supplies the mixture to the nozzle of the absorption tower 110.

The basic alkaline mixture in which the basic alkaline solution and water are mixed may be supplied using a separately connected bypass line 136 when a supply amount or a required amount of the mixture increases.

The basic alkaline solution and water may be mixed in a ratio of 1:1 to 1:5. For example, the basic alkaline solution and water may be mixed in a ratio of 1:1 to 1:4, 1:1 to 1:3, 1:1 to 1:2, 1:2 to 1:5, 1:2 to 1:3 or 1:3 to 1:5.

As the mixing ratio of the basic alkali solution in the basic alkali solution and the water mixture increases, a carbon dioxide capture rate may increase, but the mixing ratio of water may be controlled in consideration of cost.

The basic alkaline mixture may include: at least one oxide selected from the group consisting of SiO₂, Al₂O₃, Fe₂O₃, TiO₂, MgO, MnO, CaO, Na₂O, K₂O, and P₂O₃; at least one metal selected from the group consisting of Li, Cr, Co, Ni, Cu, Zn, Ga, Sr, Cd, and Pb; and at least one liquid composition selected from the group consisting of sodium tetraborate (Na₂B₄O₇·10H₂O), sodium hydroxide (NaOH), sodium silicate (Na₂SiO₃), and hydrogen peroxide (H₂O₂).

The water supply source 132 may include all water that may be easily obtained at a system installation site and may be, for example, seawater.

The average pH of the basic alkaline mixture may be at least pH 12. For example, the pH may be pH 12 to pH 12.5, pH 12, pH 12.1, pH 12.2, or pH 12.3. The pH of the basic alkaline mixed solution may be measured with a pH meter in the absorption tower 110, and when the pH of the basic alkaline mixed solution in the absorption tower 110 is less than 10.5, carbon dioxide cannot be captured anymore. Therefore, in order to match the pH of the basic alkaline mixture, the amount of the basic alkaline solution and the water may be adjusted to 0 to 100% by each valve 133 and 134 and supplied to mixer 130.

When the filling level of the basic alkaline mixture solution in the absorption tower 110 is lowered to less than 90% (measured by a level indicator), valve 135 is adjusted so that the basic alkaline mixture solution is introduced from the mixer 130, and the input may be stopped when the filling level of the solution reaches 100%. At the same time, the basic alkaline solution and water may be mixed until the pH of the basic alkaline mixed solution becomes 12.

Since the amount of the basic alkaline mixture supplied to the absorption tower 110 and the amount of the solution exiting the separator 140 are the same, the carbon dioxide capture system can be continuously maintained. The valve 135 (including the bypass valve if necessary) is adjusted so that the same amount of the basic alkali mixed solution as the flow meter value installed in the line from the absorption tower 110 to the separator 140 is supplied to the absorption tower 110, thereby making the net flow to 0.

A reactant containing carbon dioxide captured by the reaction of a basic alkaline mixture and flue gas is captured from the carbon dioxide capturing unit 111 of the absorption tower 110, and the reactant containing carbon dioxide reactant and the waste solution move to the separator 140 through the valve 114 to separate the carbon dioxide reactant and the waste solution from the reactant. For example, the separator 140 may separate using a centrifugal separation method.

The separated carbon dioxide reactant may be moved to the carbon resource storage 141 and recycled for other uses. For example, the carbon dioxide reactant may contain sodium carbonate (Na₂CO₃) or sodium hydrogen carbonate (NaHCO₃).

The carbon dioxide capture and carbon resource recovery system for land use is a system used on land, and since it is easy to secure a place to store the carbon dioxide reactant, the carbon dioxide reactants are to be separated and stored in a carbon resource storage to convert the carbon dioxide reactant into another useful material.

The carbon dioxide reactant may be produced by reacting a basic alkaline mixture with carbon dioxide, as shown in Formula 1 below.

[Formula 1] 2NaOH + CO₂ → Na₂CO₃ + H₂O Na₂CO₃ + H₂O + CO₂ - 2NaHCO₃

The waste solution, excluding the carbon dioxide reactant from the reactant, is moved to the wastewater treatment tank 142 and discarded. For example, the waste solution may include illite minerals and water contained in a basic alkaline mixture that has finished the role of a catalyst.

The residual flue gas from which carbon dioxide is removed after carbon dioxide is captured by the carbon dioxide capturing unit 111 is discharged through the discharge unit 150. For example, the remaining flue gas discharged through the discharge unit 150 may include flue gas from which carbon dioxide is removed from the flue gas and a small amount of uncaptured CO₂.

At this time, since the concentration of carbon dioxide cannot exceed the regulation standard when the residual flue gas is discharged, based on the concentration of carbon dioxide in the atmosphere to which the residual flue gas is to be discharged (set by the administrator after measuring the carbon dioxide concentration in the atmosphere in advance), residual flue gas that does not exceed the standard can be discharged.

The carbon dioxide capture and carbon resource recovery system 100 for land use may further include: a monitoring unit 160 for monitoring the filling level and pH of the basic alkaline mixture in the absorption tower; and a control unit 161 for controlling the supply amount of the basic alkaline mixture by the monitoring unit 160.

The monitoring unit 160 manages the values of the gas meter, the pH meter, and the flow meter measured in all processes of the carbon dioxide capture and carbon resource recovery system 100 for land use, and the control unit 161 is adjusted based on the values indicated by the monitoring unit 160. The valves 114, 133, 134, and 135 may be adjusted as a percentage with respect to value input from the control unit 161.

The carbon dioxide capture and carbon resource recovery system for land use, according to the present disclosure, can reduce carbon dioxide by capturing carbon dioxide in flue gas discharged from lands, such as thermal power plants, LNG, LPG, or fuel cell facilities. By converting the collected carbon dioxide into sodium carbonate or sodium hydrogen carbonate, the collected carbon dioxide may be converted into other useful materials.

The above-described present disclosure is not limited to the above-described embodiments and the accompanying drawings, and it will be apparent to those skilled in the art that various replacements, modifications, and changes may be made without departing from the technical idea of the present disclosure.

### Industrial Applicability

The present disclosure can be widely used in a carbon dioxide capture and carbon resource recovery system for land use.

## Claims

1. A carbon dioxide capture and carbon resource recovery system for land use, comprising:
a mixer for supplying a basic alkaline mixture;
an absorption tower for capturing carbon dioxide in flue gas by reacting the basic alkaline mixture supplied from the mixer and the flue gas having fine droplets through a bubbler installed at a bottom;
a separator for collecting a reactant containing carbon dioxide captured in the absorption tower and separating a carbon dioxide reactant and a waste solution from the reactant;
a carbon resource storage for storing the separated carbon dioxide reactant as a resource; and
a discharge unit for discharging a residual flue gas from which the carbon dioxide captured in the absorption tower has been removed.

2. The system of claim 1, wherein the bubbler forms flue gas microbubbles using the flue gas.

3. The system of claim 1, wherein the mixer mixes a basic alkaline solution supplied from a basic alkaline solution storage tank and water supplied from a water supply source.

4. The system of claim 3, wherein the basic alkaline solution and water are mixed in a ratio of 1:1 to 1:5.

5. The system of claim 1, wherein the average pH of the basic alkaline mixture is 12 or more.

6. The system of claim 1, wherein the basic alkali mixture comprises:
at least one oxide selected from the group consisting of SiO₂, Al₂O₃, Fe₂O₃, TiO₂, MgO, MnO, CaO, Na₂O, K₂O, and P₂O₃;
at least one metal selected from the group consisting of Li, Cr, Co, Ni, Cu, Zn, Ga, Sr, Cd, and Pb; and
at least one liquid composition selected from the group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

7. The system of claim 1, wherein the absorption tower supplies the basic alkaline mixture from the mixer through a plurality of nozzles installed on the top thereof.

8. The system of claim 1, wherein the absorption tower is configured in series, parallel, or a series and parallel complex arrangement.

9. The system of claim 1, further comprising:
a monitoring unit for monitoring a filling level and pH of the basic alkaline mixture in the absorption tower; and
a control unit for controlling the supply amount of the basic alkaline mixture by the monitoring unit.

10. The system of claim 1, wherein the carbon dioxide reactant contains sodium carbonate (Na₂CO₃) or sodium hydrogen carbonate (NaHCO₃).
